# EUROPEAN PATENT APPLICATION

(11) **EP 1 705 880 A2**
(43) Date of publication of application: **27.09.2006**
(21) Application number: 06005433.5
(22) Date of filing: 16.03.2006
(51) Int. Cl.: H04M 1/725, H04M 1/737, H04B 10/00

(54) **Communication network system, mobile terminal, authentication device, and method for visible light communication**

(30) Priority: 25.03.2005 JP 2005088869
(71) Applicant: NEC Corporation, Minato-ku Tokyo (JP)
(72) Inventor: Komatsu, Kenichi, Tokyo (JP)
(74) Representative: Vossius & Partner

(57) **Abstract**

An apparatus system for visible-light communication verification and method thereof is provided herein. The system includes a mobile terminal which includes, a light emitting circuit emitting a visible-light signal, the visible-light signal having a pattern of colors and the pattern being repeatedly emitted predetermined times, and a controller controlling the light emitting circuit and changing a period of the pattern gradually longer while repeating. The system also including an authentication device which includes, alightemitting circuit emitting a visible-light signal, the visible-light signal having a pattern of colors and the pattern being repeatedly emitted for a predetermined number of times, a controller controlling the light emitting circuit and gradually increasing a period of the color pattern with an each color pattern iteration.

## Description

The present invention relates to a mobile communication network system, a portable communication terminal, and an authentication device, and a driving method and program therefor . Inparticular, the invention relates to a mobile communication network system, a portable communication terminal, and an authentication device, and a driving method and program therefor, which can accommodate functional differences in receiving devices invisible-light communications while providing satisfactory operation or successful communication.

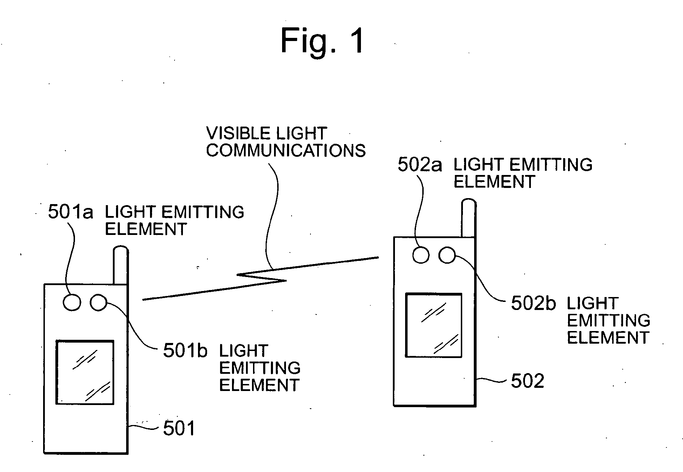

Fig. 1 is a block diagram showing the configuration of a portable communication terminal that enables related visible-light communications to be performed.

In Fig. 1, reference numeral 501 denotes a portable communication terminal including a light emitting element 501a and a light receiving element 501b; reference numeral 502, a portable communication terminal including a light emitting element 502a and a light receiving element 502b.

The portable communication terminal 501 sends information using the light-emitting element (e.g. LED) 501a, and the portable communication terminal 502 receives the optical signal and derives the original information by a light receiving element 502b such as a camera.

In this field, there are several applications such as JP-A-2004-221924, JP-A-2004-297630, JP-A-2003-084730 and JP-A-2003-505842.

A typical method of acquiring information from an external device with a portable terminal is scanning of a barcode or symbol with a camera. However, this scanning method requires adjustment of the distance or the focus of the lens, resulting in a complicated operation.

Another example of an information acquiring method using visible-light with a camera is a communication method using moving pictures which comprises plural successive patterns of colors in time lines. In this method, the information to be sent is converted to successive patterns of colors. This method is useful because it does not require adjusting the distance or the focus of the lens. With this method, authentication using moving pictures through a video telephone line can be realized. This authentication method can be realized by using an ordinary video telephone method which transfers moving picture through a network to a server.

However, the visible-light communications require matching a frequency for data transmission with a sampling frequency used in the receiver. Therefore , failure to communicate or an error in communication between these devices could occur due to performance differences among these devices.

Further, in the case of transferring information in the form of light emission patterns via a video telephone to authenticate information, the number of frames that can be transmitted per second is limited by the limitation of the video telephone system. The number of frames of moving pictures per predetermine time period varies upon transferring the moving pictures due to any delay or fluctuation, for example, due to varying volume of data transmission. Therefore a period of the light emission pattern of transmission data constantly varies due to transmission delays and system fluctuations. Therein, it is difficult to synchronize a transmitting period with a receiving sampling period.

Furthermore, during the communications for authentication, only a small amount of data such as a password is transmitted. Thus, the synchronization process before transmitting such a small amount of data increases the entire processing time.

In addition, as the visible-light communications with a portable terminal, Japanese Laid-open patent 2004-221924 proposes visible-light communications between portable terminals using an LED and a camera. However, the disclosed technique is limited to communications between particular terminals, and communications at a close distance. This technique gives no consideration to visible- light communications based on moving picture data via a network such as a video telephone.

It is an object of the present invention to enable visible-light communications without matching a period for data transmission with a sampling period on a receiver and without causing any failure to communicate due to a functional difference among receiving devices.

It is another object of the invention to facilitate synchronization of a transmitting period with a receiving sampling period upon transferring information corresponding to light emission patterns via a video telephone to authenticate the information.

As described above, the following beneficial effects are produced in the present invention.

A first effect is that the same data is sequentially sent using different frequencies, whereby communications can be executed without synchronizing a frequency on a transmitter with a sampling frequency on a receiver, communication between devices with different sampling frequency on the receiver, or transmission period variation due to delay, fluctuation of transferring data, or limitation of the number of frames of moving pictures are readily accommodated by an embodiment of the present invention wherein the same data is sequentially sent using different frequencies.

A second effect is that the data is sequentially sent while changing a period of the data transmission from a short sampling period to a long sampling period, whereby the receiver can acquire data in short time with a short sampling period, and data transfer can be completed in the short period if a receiving device has a high performance, and the network performance for transferring moving pictures are sufficient.

A third effect is that with different periods data is sequentially sent with different periods beforehand, whereby a process for synchronization of a transmitting period and a receiving sampling period can be omitted. Therefore, the process used for synchronization, such as an Ack/Nack process indicating success/failure of transmission can be omitted. Therefore, data can be sent with a constant amount irrespective of success/failure of data transmission.

Hereinafter, exemplary embodiments of the present invention will be described with reference to the accompanying drawings.
Fig. 1 shows a block diagram showing the structure of related portable communication terminals that execute visible-light communications.
Fig. 2 (a) shows a signal configuration according to an exemplary embodiment of the present invention.
Fig. 2 (b) shows a signal configuration according to an exemplary embodiment of the present invention.
Fig. 3 shows a block diagram showing the configuration of a gate lock system using a video telephone of a cell phone according to an exemplary embodiment of the present invention.
Fig. 4 shows a block diagram showing the configuration of an authentication server according to an exemplary embodiment of the present invention.
Fig. 5 shows a block diagram showing the configuration of an authentication device.
Fig. 6 shows a block diagram showing the configuration of a cell phone terminal.
Fig. 7 (a) shows a signal configuration figure showing a detailed signal configuration of a visible-light signal.
Fig. 7 (b) shows a signal configuration figure showing a start signal configuration of a visible-light signal.
Fig. 7(c) shows a signal configuration figure showing an end signal configuration of a visible-light signal.
Fig. 8(a) shows a signal configuration figure showing the relationship between a transmitting period and a receiving period.
Fig. 8 (b) shows a signal configuration figure showing the repeated patterns of color, the period of which is increasing over time.
Fig. 9(a) shows a signal configuration figure showing the relationship between a transmitting period and a receiving period.
Fig. 9 (b) shows a signal configuration figure showing the relationship between a transmitting period and a receiving period.
Fig. 10 shows a signal configuration figure showing a signal with a noise signal.
Fig. 11 shows a flowchart showing an operation according to an exemplary embodiment of the present invention.
Fig. 12 shows a flowchart showing an operation according to another exemplary embodiment of the present invention.

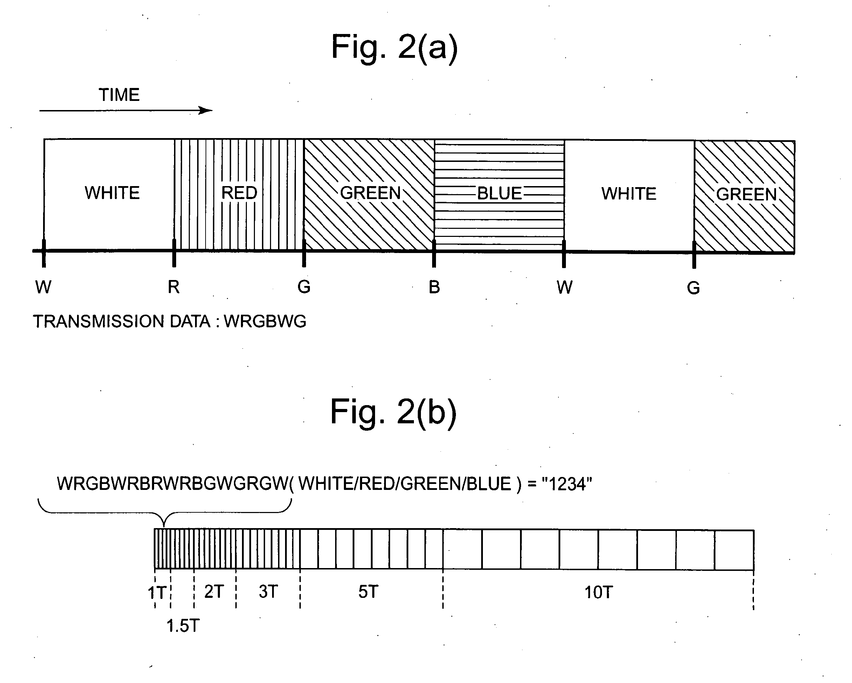

Figs. 2 (a) and 2 (b) show the system configuration of visible-light communications according to an exemplary embodiment of the present invention.

In Figs. 2(a) and 2(b), information of a password of 1234 is converted into light emission patterns that are emitted in time series order of WRGBWRGBWRGBWRGBW (W: while, R: red, G: green, B: blue) . In the transmitter, the light emission patterns are sequentially transmitted while changing a period thereof from a short period (1T) to a long period (10T).

In the receiver, a sampling period is arbitrarily set depending on the device performance, and thereby a point of variation of color is detected relative to the receiver's sampling period. If a sampling period of the receiver is not suitable for a short period of a light emission pattern, a subsequent light emission pattern with a long period may be detected.

The light emission pattern with the longest period, lowest frequency, is set to where any receiving device can detect the light emission pattern if the receiver waits till the data at the lowest frequency is transmitted.

In this way, in this exemplary embodiment, the transmitter converts target information into light emission patterns of color information, and sequentially transmits the light emission patterns while changing the period thereof from a short period to a long period. Then, the receiver detects a changing point of color, and detects only such data that can be detected with a sampling period of the receiver. Hence, it is unnecessary to synchronize a period of data in the transmitter with the sampling period in the receiver, and data according to this embodiment can be transferred to and detected by various receiving devices having different sampling periods. Even if the period for data transmission varies due to a delay or a fluctuation on a network system, the transmission can be received/recognized by the constant amount of data without ACK/NACK processing. Accordingly, if communication environments are sufficient and receiving devices have high-performance, the transmission and detection of a small amount of data can be completed quickly because detection of light emission patterns having a brief period is completed in a short time.

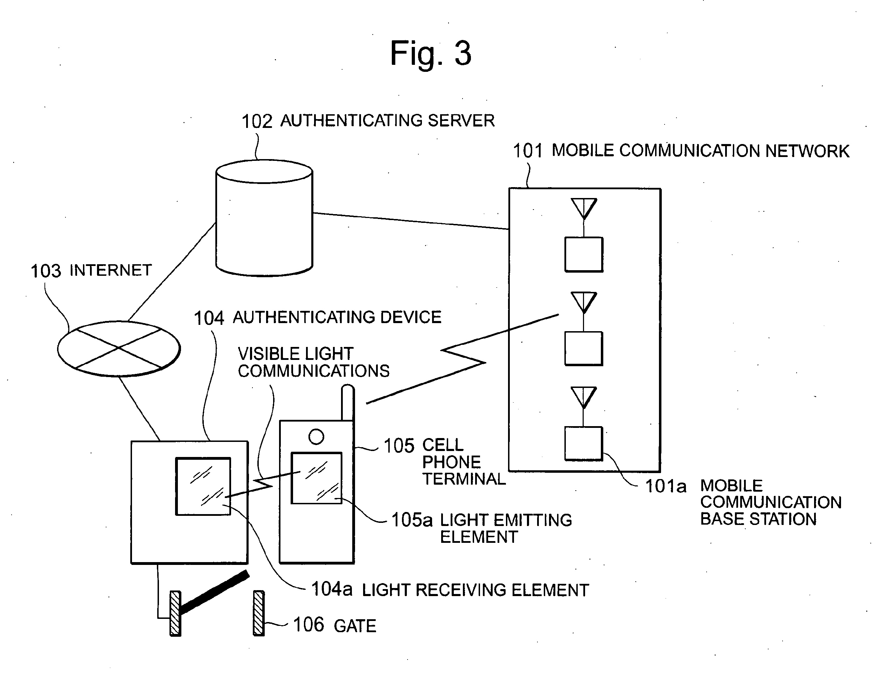

Fig. 3 is a block diagram showing the configuration of a gate lock system using a video telephone of a cell phone according to an exemplary embodiment of the present invention.

In Fig. 3, a gate 106 is linked with an authentication device 104 to limit the access from users.

The system comprises the mobile communication network 101, the authentication server 102, the Internet 103, the authentication device 104, cell phone terminal 105 and the gate 106.

This system is used to control the access of the user to the gate 106, who has the cell phone terminal 105. The authentication device 104 controls the gate 106.

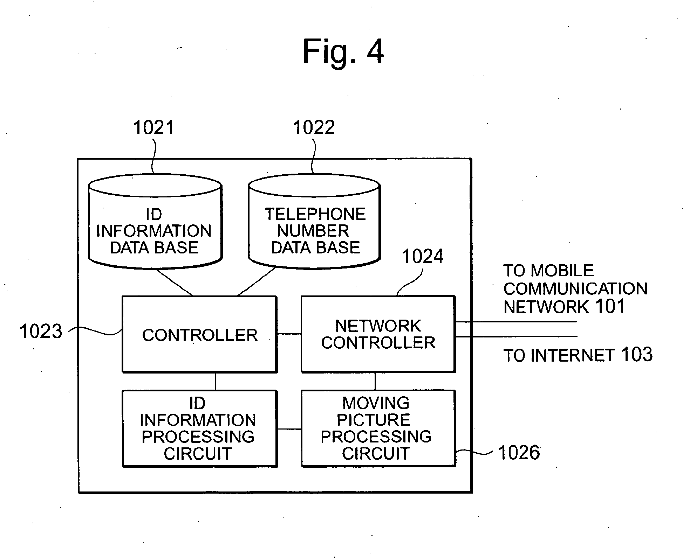

Fig. 4 is block diagram showing the configuration of the authentication server 102. The authentication server 102 has the ID information data base 1021, the telephone number data base 1022, the controller 1023, the network controller 1024, the ID information processing circuit 1025 and the moving picture processing circuit 1026.

The ID information data base 1021 has the identification (ID) information (e.g. password)of the user of the system in Fig. 3. The telephone number data base 1022 has identification (ID) information of cell phone terminal 105 such as a telephone number or IP address of the user terminal 105. The controller 1023 controls all of the elements of the authentication 102. The controller 1023 derives the ID information which corresponds to the telephone number of the user. The telephone number of the user is sent from the network controller 1024. The network controller 1024 is linked to the mobile communication network 101 and the Internet 103, and communicates with the authentication device 104 and the cell phone terminal 105. The ID information processing circuit 1025 has a coding function which codes the ID information from ID information data base 1021 into the information of colors suitable to be transmitted according to a video telephone protocol. And the ID information processing circuit 1025 also decodes the information of colors received through the network controller 1024 into the ID information of the user. The moving picture processing circuit 1026 has a function of a video telephone and converts the ID information into the moving picture, and then transmits/receives the moving picture through the network controller 1024 to the outside equipment of the authentication server 102 such as the authentication device 104 and the cell phone terminal 105.

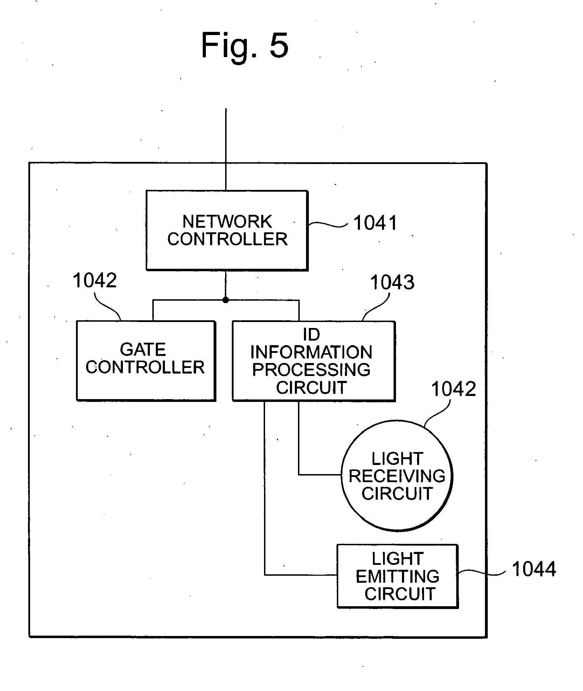

Fig. 5 is block diagram showing the configuration of the authentication device 104. The authenticationdevice 104 has the network controller 1041, the gate controller 1042 , the ID information processing circuit 1043, the light emitting circuit 1044 (e.g. a LCD display) and the light receiving circuit 104a (e.g. a camera).

The network controller 1041 communicates with the authentication server 102 and receives the password from the authentication server 102. The gate controller 1042 opens and closes the gate 106. The light emitting circuit 1044 is able to emit the visible-light signal in which the password from network controller is embedded. The light receiving circuit 104a receives a visible-light signal from the cell phone terminal 105, and send the received signal to the ID information processing circuit 1043. The light receiving circuit 104a has the color filter to detect the configuration of color of the received signal. The light receiving circuit 104a decodes the information of colors into the password and sends the password to the ID information processing circuit 1043. The ID information processing circuit 1043 compares the password from the light emitting circuit 104a and the password from the network controller 1041. If the both passwords are identical, the ID information processing circuit 1043 instructs the gate controller 1042 to open the gate 106. Otherwise, the ID information processing circuit 1043 does not instruct the gate controller 1043 to open the gate 106.

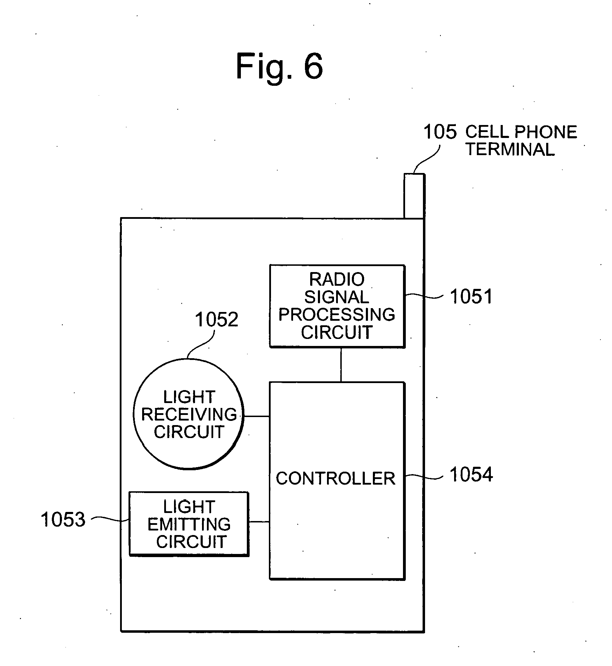

Fig. 6 is block diagram showing the configuration of the cell phone terminal 105. The cell phone terminal 105 has the radio signal processing circuit 1051, the light receiving circuit 1052 (e.g. a camera), the light emitting circuit 1053 (e.g. a LCD display) and the controller 1054.

The radio signal processing circuit 1051 receives a video telephone call from the authentication server 102 through the mobile communication network 101. The controller 1054 processes the data of a moving picture of a video telephone and sends the data to the light emitting circuit 1053, and processes the data received from the light receiving circuit 1052 and sends the radio signal processing circuit 1051. The light emitting circuit 1053 displays the moving picture including the information of the user password. The light receiving circuit 1052 receives the visible-light and sends it to the controller 1054.

The operation of the gate lock system is explained hereinafter. The user of the cell phone terminal 105 sends the request to the authentication server 102 in order to open the gate 106. The authentication server 102 retrieves the password corresponding to the user from the ID information data base 1021, and sends the password in the form of a moving picture back to the cell phone terminal 105 through a video telephone line. In the meantime, the authentication server 102 also sends that password through a data transmission line. Here, "video telephone" is used for the communication in the form of moving picture for a so-called video telephone including color information, and "data transmission" is used for the communication in the form of general data. The cell phone terminal 105 emits the visible-light signal which includes the information of the user password to the authentication device 104. The authentication device 104 checks the password and compares it with the password received from the authentication server 102. If the both passwords are identical, then the authentication device 104 opens the gate 106, otherwise, it does not open the gate 106.

In summary, according to an exemplary embodiment described above, the cell phone terminal 105 emits the information of colors including the password to the authentication device 104 and the authentication device 104 checks the password with the password received from the authentication server 102.

Hereinafter, the other exemplary embodiments are explained. In an other exemplary embodiment, the conf iguration of the gate lock system is the same as in the first exemplary embodiment. In this exemplary embodiment, after the cell phone terminal 105 sends a request to the authentication server 102 in order to open the gate 106, the authentication server 102 sends the corresponding password in the form of color information to the authentication device 104 through a video telephone line. And the light emitting device 1044 in the authentication device 104 emits a visible-light signal including the password to the cell phone terminal 105 by using the light emitting circuit 104a. The cell phone terminal 105 converts the received information of colors into the information of password and sends it to the authentication server 102. The authentication server 102 compares the password received from the cell phone terminal 105 with the password sent to the authentication device 104. If both passwords are identical, the authentication server 102 sends the instruction to the authentication device 104 to open the gate 106. If the both password are not identical, the authentication server 102 does not send such an instruction.

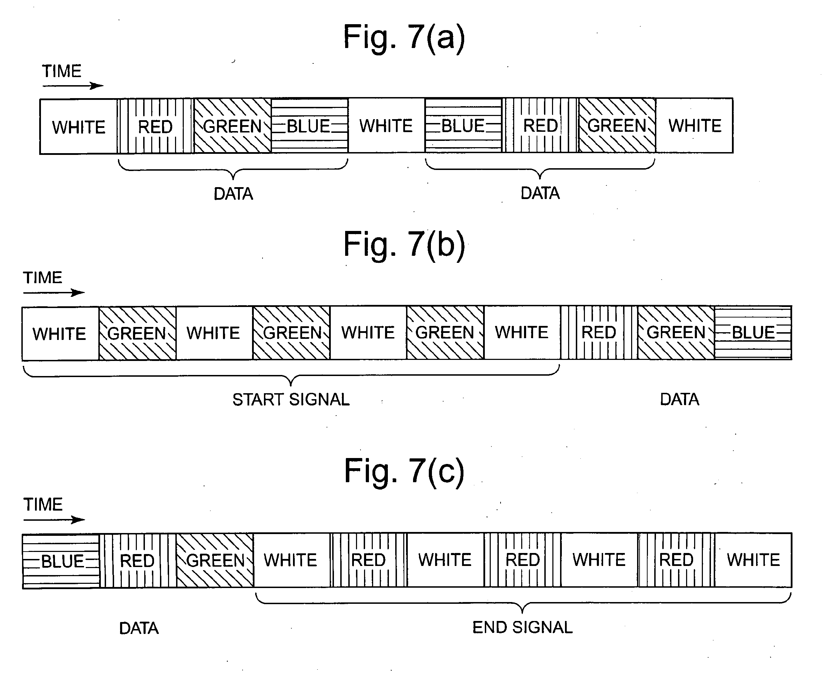

Figs. 7 (a) to 7 (c) show the detailed color configuration of the visible-light communications shown in Fig. 2.

Figs. 7 (a) to 7 (c) show data communications based on visible-light that varies over time in time series. Here, three primary colors, red, green, and blue, are used for communications. Color information is represented by light intensity which is scaled from 0 (lower limit) to 255 (upper limit) as shown in Table 1.

**Table 1**

| | R | G | B |
|---|---|---|---|
| Red | 255 | 0 | 0 |
| Green | 0 | 255 | 0 |
| Blue | 0 | 0 | 255 |
| White | 255 | 255 | 255 |

The receiver sets a predetermined threshold value and acquires a value closer to the upper/lower limit to determine a color.

As shown in Table 2, data from 0 to B are assigned to each combination of colors. In this way, a password is converted into light emission patterns in which the color changes in a time direction. This example adopts a method of detecting a changing point of color, so the same colors should not be used to the successive time period. In this exemplary embodiment method, the first and last colors have to be white as the start/end signals.

**Table 2**

| Data | Combination of two colors | Combination of three colors |
|---|---|---|
| 0 | RG | RGR |
| 1 | RB | RGB |
| 2 | GR | RBR |
| 3 | GB | RBG |
| 4 | BR | GRG |
| 5 | BG | GRB |
| 6 | | GBR |
| 7 | | GBG |
| 8 | | BRG |
| 9 | | BRB |
| A | | BGR |
| B | | BGB |

In some arbitrary time period, if the transmitter changes the color twice from beginning white, the possible combination of color from the three primary colors is 6 (3 times 2). And if the transmitter changes the color tree times from beginning white in the same time period, the possible combination is 12 (3 times 2 times 2). In this case, the color before the first changing point (white) means the start position and the last white means the end position.

In this exemplary embodiment, data is transmitted based on combinations of three primary colors for illustrative purposes, but other colors, for example, mixed colors thereof such as yellow, cyan, and violet may be used in combination. The more colors, the more possible color combinations of the data. Therefore, higher complexity data ca be efficiently transmitted.

Further, information indicating the start/end positions of data is prepared, and the receiver receives the information to detect the start/end positions of transmission data. In this example, white color should be used at the start/end positions.

Fig. 7 (a) shows, as an example, the data transmission of WRGBWBRGW. In this case, the data "2" by RGB and "8" by BRG are sent. Fig. 7 (b) shows, as an example, the beginning of the data transmission using WGWGWGW as a start signal. In this case, after WGWGWGW, the data transmission is begun. Fig. 7(c) shows, as an example, the ending of the data transmission using WRWRWRW as a stop signal. In this case, WRWRWRW means the ending of the data transmission. As a start signal and stop signal, other combination of colors are possible as long as that combination never appears in the data transmission other than at the beginning or ending.

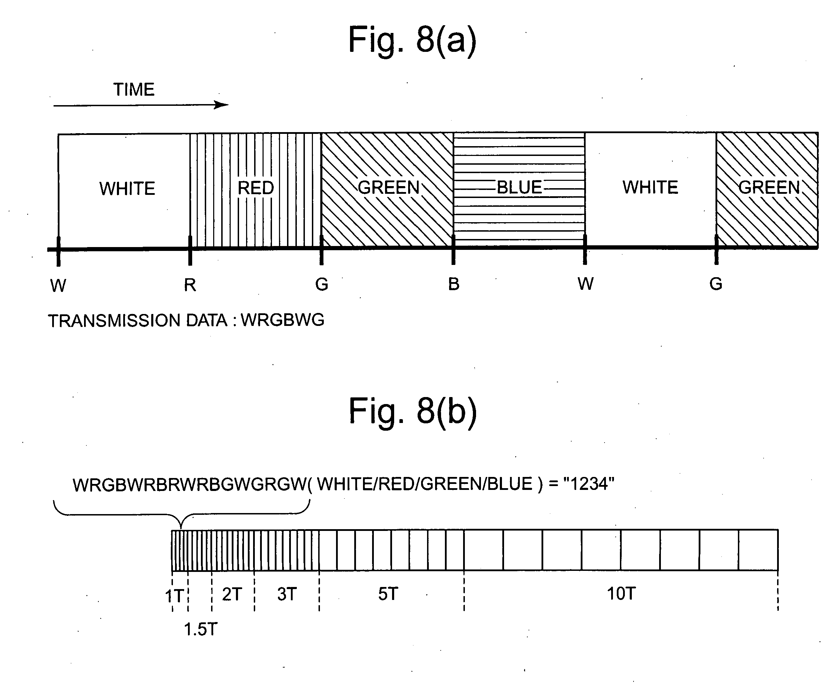

Figs. 8 (a) and 8 (b) are detailed configuration showing light emission patterns of color information sent from the authenticating server 102 shown in Fig. 2.

Fig. 8 (a) shows an example where movingpicture data corresponding to color information that is expressed such that several combinations of three colors appear between the two white colors indicating the start/stop position as described above (W: 255, 255, 255 :W) . In the example of Fig. 4(a), data of "1" is sent. For example, in the case of sending data on a password of "1234" , light emission patterns that vary in color in a time direction in the order of WRGBWRBRWRBGWGRGW (W: while, R: red, G: green, B: blue) are sent, with reference to combinations of three colors that alternatively appear as shown in Table 2 between two white colors.

Fig. 8 (b) shows an example of sequentially sending light emission patterns (WRGBWRBRWRBGWGRGW) of the color information representing the password of "1234" as illustrated in the example of converting the color information, in the form of moving pictures on the video telephone by changing a period for the patterns from a short period (1T) to a long period (10T).

For example, assuming that the number of frames of moving pictures is set to 30 frames/sec and the color is changed every two frames (about 0.0666 sec.) in the transmitter, the above light emission patterns of "1234" has 17 changing points of color, and appear for about 1.13 seconds (0.0666 times 17 ) which is a period (1T) . At the maximum period (10T), the period is about 11.3 seconds in which the color is changed every 0.666 seconds.

In the case that sampling frequency of a light receiving circuit 104a in the receiver is too slow to detect data of a short period, the receiver try to detect repeatedly the data until the data of a long enoughperiod for the slow sampling frequency of the light receiving circuit 104a will be sent. In this way, it is possible to execute communications using the different frequency between the transmitter and the receiver.

In video telephones, the number of transmitted frames of moving pictures sometimes reduces due to any delay and fluctuation caused by a network performance. In those cases, if frames are skipped during transferring data having a short period, and the data communication can end in failure.

To solve this type of problem, the maximum period of data transmission is set long enough for transmission even under the worst conditions of the video telephone.

For example, even when a frame period of a video telephone that is basically 30 frames/sec is changed to 15 frames/sec due to changes in communication environments, the receiver can detect light emission patterns by waiting for subsequent data having a period of 2T or longer.

Further, according to another exemplary embodiments, if the number of colors is increased by mixing three primary colors, or setting a light-intensity threshold at 128, in addition to 0 and 255, as a intermediate value, the number of light emission patterns can be reduced in order to send the same amount of data and the communication time can be reduced.

According to another exemplary embodiment, combinations of two colors out of three primary colors RGB, for example, six light emission patterns are possible (3 times 2), and senary data is transmitted. According to another exemplary embodiment, considering combinations of two colors out of six colors, which are three primary colors and mixed colors thereof, i.e. , yellow, cyan, and violet, 30 light emission patterns are possible (6 times 5) , and base 30 data is transmitted. Here, "1234" is a four-digit number when expressed in decimal numbers, but is a three-digit number "1B4" (base 30 number: 0123456789ABCDEFGHIJKLMNOPQRST) when expressed in base 30 numbers. In this exemplary embodiment, the number of light emission patterns reduces, and the communication time is shortened to 75%. The communication time can be further shortened by increasing the number of color patterns and the number of changing points of color.

In the above exemplary embodiment, a portable terminal 105 having a light receiving circuit 1052 such as a camera or a personal computer with a camera may be used as the authentication device 104.

Further, the cell phone terminal 105 can be configured to acquire data by being coupled to the authentication server 102, or to register data previously to the authentication server 102. visible-light

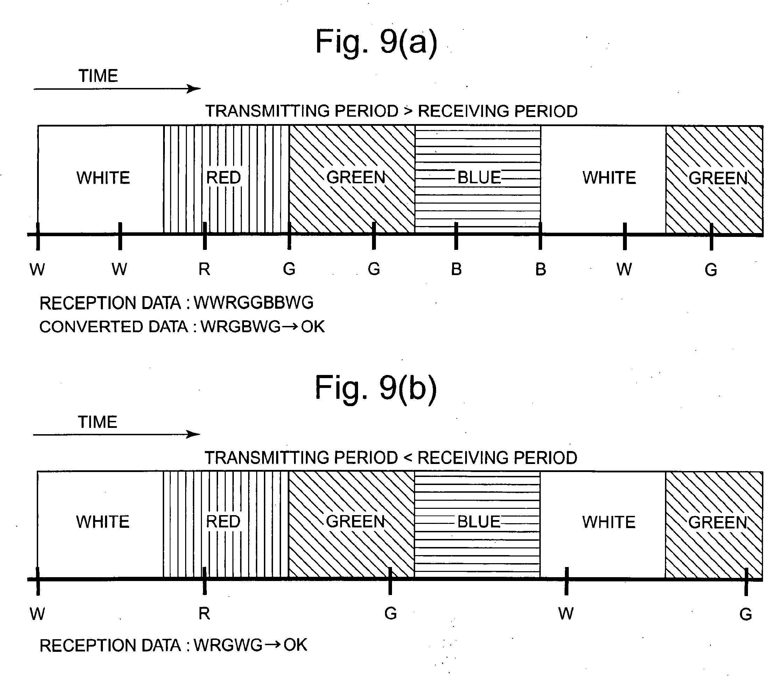

Fig. 9 (a) shows the situation where the sampling period in the authentication device 104 is smaller than the period of changing color in the signal from the cell phone terminal 105. In this case, the authentication device 104 detects "WWRGGBBWG". If the authentication device 104 eliminates the successive colors except one color in the signal by using the ID information processing circuit 1043, the authentication device 104 derives the "WRGBWG" which accords to the predetermined data format.

On the other hand, Fig. 9(b) shows the situation where the sampling period in the authentication device 104 is larger than the period of changing color in the signal from the cell phone terminal 105. In this case, the authentication device 104 detects "WRGWG" and can not derive the correct signal from received signal.

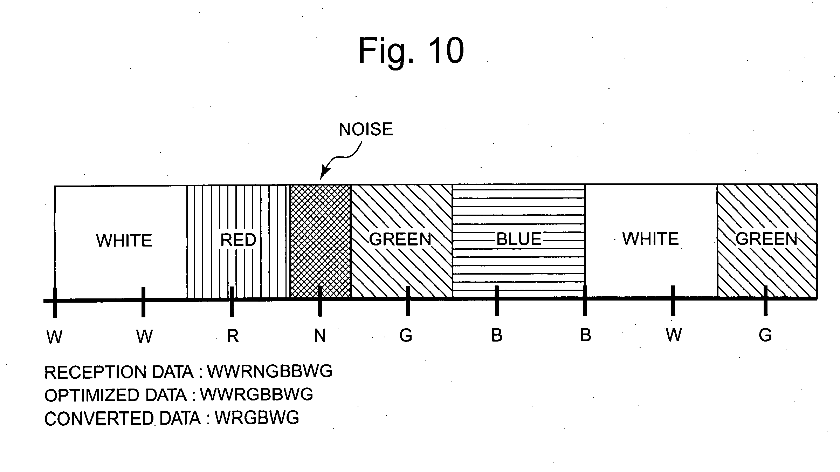

Fig. 10 shows the situation where the authentication device 104 receives the noise signal in addition to the signal from the cell phone terminal 105. This noise signal is, for example, the light from the sun or lamps. In this case, the authentication device 104 detects "WWRNGBBWG" and can derive the correct signal "WRGBWG" by ignoring the noise signal and eliminating the successive colors except one color. If the noise period is too large for the authentication device 104 to correct the received signal, the authentication device 104 waits for the next data transmission with a longer period.

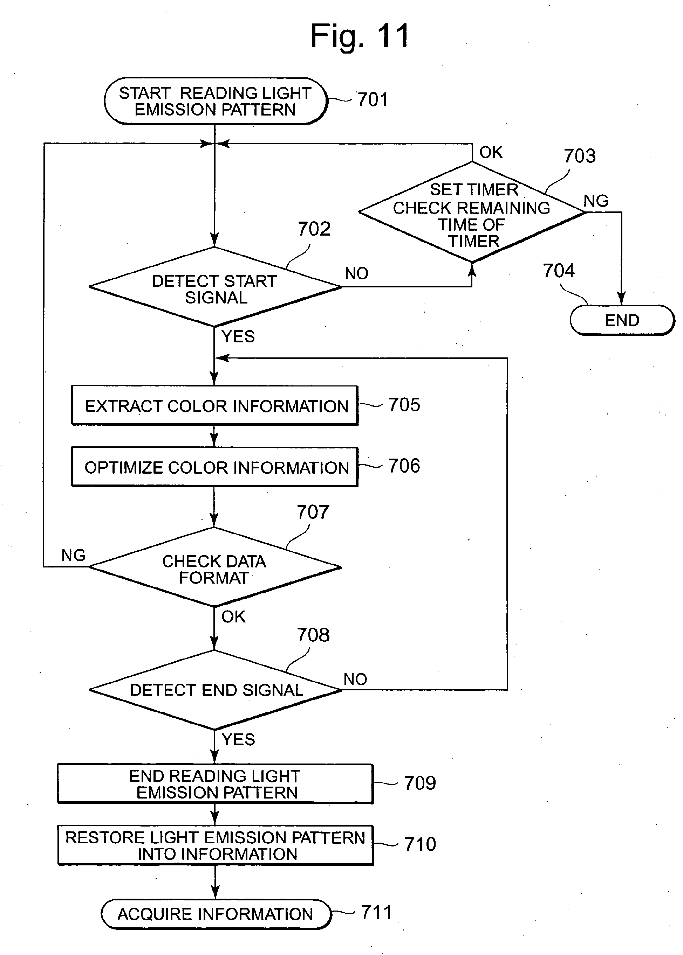

Next, an operation according to an exemplary embodiment of the present invention of the visible-light communication system in Fig. 3 is described with reference to a flowchart in Fig. 11. In the following explanation, the cell phone terminal 105 sends the color pattern which includes the password and the authentication device 104 receives the password in the form of color pattern. Therefore, the operation shown in Fig. 7 is executed by the authentication device 104.

At the beginning, In Fig. 11, video-telephone moving pictures having light emission patterns representing information about a password sent from an authenticating server 102 to a user' s cell phone terminal 105 are sent in the light form from its light emitting circuit 1053. In response to a user's request, the authentication device 104 receives the light emission patterns by the light receiving circuit 104a and starts the process described in Fig. 11 (Step 701).

The authentication device 104 decides whether the received optical signal indicates the start signal of the communication or not (Step 702).

If the start signal cannot be detected, the authentication device 104 continues to try to detect the starting signal until the timer expires (Step 703).

Here, the transmission data is transmitted repeatedly, its period being changed,periodically, so that a timer value is set to such a value that the authentication device 104 can detect the data by using its own sampling frequency. If the authentication device 104 can not detect the start signal before the timer expires, the process ends (Step 704).

In the case where the period of the transmission data is smaller than the sampling period in the authentication device 104 as shown in Fig. 9 (b) , a changing point of color cannot be detected correctly. In this case, the authentication device tray repeatedly to detect the data until the data having a longer period which equals to or longer than that can be detected is sent as described in the explanation of Fig. 9(b)(Step 702, Step 703).

If the start signal is received, the authentication device 104 starts to detect color information from the received moving pictures(Step 705).

The color is decided by predetermined threshold. However, if the color decision cannot be carried out due to noises as shown in Fig. 10, that changing point of color is ignored (Step 706) The detection of color information is continued until the reception of the end signal. However, if the detected color information, does not conform to a predetermined format of color information, or a read error occurs due to bad communication environments, the detection of a start signal of subsequent data having a longer period is executed (Step 706, NG).

The authentication device 104 checks whether the received data accords to a predetermined data format (Step 707). The eliminating from the successive same color process described in the explanation of Fig. 9(a) is executed in this step (Step 707). If patterns of the color information can be detected between the start signal and the end signal with no error and the authentication device 104 receives the stop signal (Step 708, YES) , the authentication device 104 instructs the light receiving circuit 104a to end reading the visible-light (Step 709) and then converts the received patterns of color information into the password (Step710, Step 711) . After that, the authentication device 104 compares this received password with the password received from the authentication server 102.

When the password received from the cell phone terminal 105 matches the password from the authentication server 102, the user is allowed to make an access, and the gate is unlocked. The flow chart in Fig. 11 is applicable to the situation where the authentication device 104 sends the visible signal including the password from the authentication server 102 and the cell phone terminal 105 receives the password and sends it to the authentication server 102 to be authenticated to the gate 106. In this case, the processes described in Fig. 11 are executed in the cell phone terminal 105.

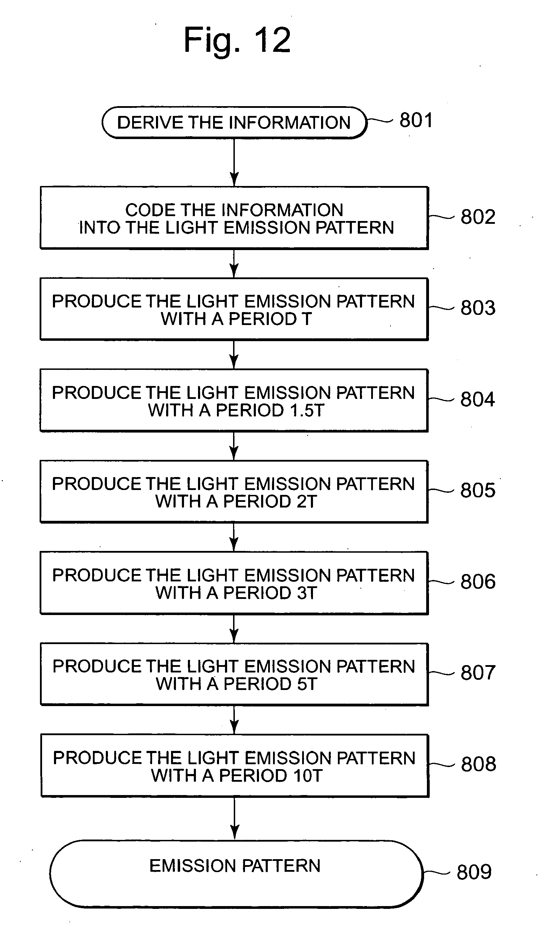

Fig. 12 is a flow chart of an authentication system wherein the cell phone terminal 105 when it sends the password in the form of visible-light signal, the cell phone terminal derives the password signal sent from the authentication server 102 through the radio signal processing circuit 1051 (Step 801). The controller 1054 codes the password into the light emission pattern (Step 802). The controller 1054 produces the light emission pattern in which the password is embedded with a period of changing color (T) (Step 803) . Also, The controller 1054 produces the light emission pattern in which the password is embedded with a period of changing color is 1. 5T, 2T, 3T, 5T and 10T (Step 804,805,806,807,808,809). Then, the light emitting circuit 1053 emits the produced light emission pattern to the authentication device 102 in order (Step 809).

The flow chart in Fig. 12 is applicable to the situation where the authentication device 104 sends the visible signal including the password from the authentication server 102 and the cell phone terminal 105 receives the password and sends it to the authentication server 102 to be authenticated to the gate 106. In this case, the processes described in Fig. 8 are executed in the authentication device 104.

According to the exemplary embodiment, even with the maximum period of light emission patterns, if data acquisition ends in failure, a reading processing may be stopped, or an access may be automatically made again to restart the transmission of light emission patterns from a short period.

The present invention is applicable to a portable communication terminal that executes visible-light communications.

Process executed along the flow charts in Fig. 11 and 12 can be provided as a program. In this case, this program is executed by the processor in the cell phone terminal 105 or the authentication device 104.

## Claims

1. A mobile terminal comprising:
a light emitting circuit which emits a visible-light signal, said visible-light signal having a pattern of colors and said color pattern being repeatedly emitted for a predetermined number of times;
a controller which controls said light emitting circuit and gradually increases a period of said color pattern with an each color pattern iteration.

2. The mobile terminal according to claim 1, further comprising:
a radio signal processing circuit which receives a radio signal from a base station, wherein said light emitting circuit emits said color pattern based on said radio signal received by said radio signal processing circuit.

3. A mobile terminal comprising:
a light receiving circuit which receives a visible-light signal, said visible-light signal having a pattern of colors, said color pattern being emitted repeatedly for a predetermined number of times, wherein a period of said color pattern is gradually increased with an each color pattern iteration;
a controller which has a predetermined sampling frequency and detects said color pattern of colors, said color pattern having a period suitable for said predetermined sampling frequency.

4. The mobile terminal according to claim 3, further comprising:
a radio signal processing circuit which transmits a radio signal based on said detected pattern of colors to a base station.

5. An authentication device comprising:
a light emitting circuit which emits a visible-light signal, said visible-light signal having a pattern of colors and said color pattern being repeatedly emitted for a predetermined number of times;
a controller which controls said light emitting circuit and gradually increases a period of said color pattern with an each color pattern iteration.

6. The authentication device according to claim 5, further comprising:
a network controller which receives a signal from a base station, wherein said light emitting circuit emits said color pattern based on said signal received by said network controller.

7. An authentication device comprising:
a light receiving circuit which receives a visible-light signal, said visible-light signal having a pattern of colors., said color pattern being emitted repeatedly for a predetermined number of times, wherein a period of said color pattern is gradually increased with an each color pattern iteration;
a controller which has a predetermined sampling frequency and detects said color pattern, said color pattern having a period suitable for said predetermined sampling frequency.

8. The authentication device according to claim 7, further comprising:
a network controller which transmits a signal based on said detected pattern of colors to a server.

9. A communication method of a mobile station comprising:
emitting a visible-light signal, said visible-light signal having a pattern of colors;
repeating said emitting process for a predetermined number of times; gradually increasing a period of said color pattern with an each color pattern iteration.

10. The communication method according to claim 9, further comprising:
receiving a radio signal from a base station, wherein said emitting process emits said color pattern based on said radio signal.

11. A communication method of a mobile station comprising:
receiving a visible-light signal, said visible-light signal having a pattern of colors, said color pattern being emitted repeatedly for a predetermined number of times, wherein a period of said color pattern is gradually increased with an each color pattern iteration;
sampling said received visible-light signal by a predetermined sampling frequency;
detecting said color pattern of colors whose period is suitable for said predetermined sampling frequency.

12. The communication method according to claim 11, further comprising:
transmitting a radio signal based on said received pattern of colors to a base station.

13. A communication method of an authentication device comprising:
emitting a visible-light signal, said visible-light signal having a pattern of colors;
repeating said emitting process for a predetermined number of times; gradually increasing a period of said color pattern with an each color pattern iteration.

14. The communication method according to claim 13, further comprising:
receiving a signal from a server, wherein said emitting process emits said color pattern of colors based on said received signal.

15. A communication method of an authentication device comprising:
receiving a visible-light signal, said visible-light signal having a pattern of colors, said color pattern being emitted repeatedly for a predetermined number of times, a period of said color pattern being gradually increased with an each color pattern iteration;
sampling said received visible-light signal by a predetermined sampling frequency;
detecting said color pattern of colors whose period being suitable for said predetermined sampling frequency.

16. The communication method according to claim 15, further comprising:
transmitting a signal based on said received pattern of colors to a server.

17. A communication network system comprising:
a mobile terminal, comprising:
a light emitting circuit which emits a visible-light signal, said visible-light signal having a pattern of colors and said color pattern being repeatedly emitted for a predetermined number of times;
a controller which controls said light emitting circuit and gradually increases a period of said color pattern with an each color pattern iteration;
an authentication device, comprising:
a light receiving circuit which receives said visible-light signal from said mobile terminal;
a controller which has a predetermined sampling frequency and detects said color pattern of colors, said color pattern having a period suitable for said predetermined sampling frequency.

18. A communication network system comprising:
an authentication device, comprising:
a light emitting circuit which emits a visible-light signal, said visible-light signal having a pattern of colors and said color pattern being repeatedly emitted for a predetermined number of times;
a controller which controls said light emitting circuit and gradually increases a period of said color pattern with an each color pattern iteration;
a mobile terminal, comprising:
a light receiving circuit which receives said visible-light signal from said mobile terminal;
a controller which has a predetermined sampling frequency and detects said color pattern, said color pattern having a period suitable for said predetermined sampling frequency.
